(19) Europäisches Patentamt
European Patent Office
Office européen des brevets

(11) **EP 2 366 983 B1**

(12) **EUROPÄISCHE PATENTSCHRIFT**

(45) Veröffentlichungstag und Bekanntmachung des Hinweises auf die Patenterteilung:
**29.04.2020 Patentblatt 2020/18**

(51) Int Cl.:
***G01F 23/284*** *(2006.01)* ***G01F 23/296*** *(2006.01)*

(21) Anmeldenummer: **10156793.1**

(22) Anmeldetag: **17.03.2010**

(54) **Mobilitätserkennung in Füllstandmessgeräten**

Mobility recognition in filling level measurement devices

Reconnaissance de mobilité dans un appareil de mesure de niveau

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**21.09.2011 Patentblatt 2011/38**

(73) Patentinhaber: **VEGA Grieshaber KG**
**77709 Wolfach (DE)**

(72) Erfinder:
• **Griessbaum, Karl**
**77796, Mühlenbach (DE)**

• **Welle, Roland**
**77709, Oberwolfach (DE)**

(74) Vertreter: **Maiwald Patent- und Rechtsanwaltsgesellschaft mbH**
**Elisenhof**
**Elisenstraße 3**
**80335 München (DE)**

(56) Entgegenhaltungen:
**EP-A1- 2 148 219** **US-A1- 2005 052 314**
**US-A1- 2006 052 954**

EP 2 366 983 B1

**Beschreibung**

Gebiet der Erfindung

Die vorliegende Erfindung betrifft die Füllstandmessung. Insbesondere betrifft die Erfindung ein Füllstandmessgerät zur Mobilitätserkennung eines Echos, ein Verfahren zur Mobilitätserkennung eines Echos, ein Programmelement und ein computerlesbares Medium.

Technischer Hintergrund der Erfindung

Bei den nach dem FMCW oder Impuls - Laufzeitverfahren arbeitenden Füllstandsensoren werden elektromagnetische oder akustische Wellen in Richtung einer Füllgutoberfläche emittiert. Daran anschließend zeichnet der Sensor die vom Füllgut und den Behältereinbauten reflektierten Echosignale auf, und leitet daraus den jeweiligen Füllstand ab. Andere Füllstandsensoren arbeiten nach dem Prinzip der geführten Mikrowellen.

Das üblicherweise nach dem aktuellen Stand der Technik verwendete Verfahren baut im Wesentlichen auf einer vom Benutzer bei leerem Behälter durchzuführenden Störechospeicherung auf.

DE 33 37 690 A1, DE 42 34 300 A1, EP 16 281 19 A1, US 7,284,425 B2, WO 2009/003700 A1, EP 21 482 19 A1 beschreiben solche Verfahren.

Die dort beschriebenen Verfahren erfüllen die Aufgabe, das Füllstandecho bei Vorhandensein von Störechos sicher zu identifizieren, nur unzureichend.

So kann vom Benutzer eines Füllstandmessgerätes nicht immer verlangt werden, im Rahmen der Inbetriebnahme des Sensors eine Störechospeicherung bei leerem Behälter vorzunehmen. Insbesondere bei Ersatzbeschaffungen im laufenden Betrieb kommt es immer wieder vor, dass der zu messende Behälter komplett mit Material gefüllt ist. Dennoch soll auch ein neu installierter Füllstandsensor eine sichere Messung gewährleisten.

Das Verfahren zur Identifikation des Füllstandechos aufgrund kontinuierlicher zeitlicher Verschiebung in aufeinanderfolgenden Empfangsphasen stößt bislang in der praktischen Anwendung an seine Grenzen. Eine Voraussetzung für eine zuverlässige Anwendung des Verfahrens kann die Implementierung eines robusten Algorithmus zur Erkennung von Verschiebungen einzelner Echos sein. Bekannte Verfahren zur Erkennung von Bewegungen unter Zuhilfenahme eines vorab durchzuführenden Trackings beseitigen die Notwendigkeit eines robusten Verfahrens ebenfalls nicht. So kann es im Rahmen eines Tracking-Verfahrens immer wieder zu Fehlzuordnungen von Echos zu bestehenden Tracks kommen, was zu einer Fehlermittlung der Bewegungsinformation führen wird.

US 2005/0052314 A1 beschreibt ein Füllstandmessgerät, das nach dem Laufzeitprinzip arbeitet und nach der Aktivierung sofort ohne Eingabe des aktuellen Füllstands den Füllstand bestimmen kann.

US 2006/0052954 A1 beschreibt ein Füllstandmessgerät mit einem Speicher für parasitäre Echos.

Zusammenfassung der Erfindung

Es ist eine Aufgabe der Erfindung, eine robuste Methode zur Erkennung von zeitlichen Veränderungen charakteristischer Kennwerte eines oder mehrerer Echos innerhalb eines Füllstandmessgeräts bereitzustellen.

Diese Aufgabe wird durch die Merkmale der unabhängigen Patentansprüche gelöst und Weiterbildungen der Erfindung ergeben sich aus den Unteransprüchen.

Es sind ein Füllstandmessgerät zur Mobilitätserkennung eines Echos, ein Verfahren zur Mobilitätserkennung eines Echos, ein Programmelement und ein computerlesbares Medium gemäß den Merkmalen der unabhängigen Patentansprüche angegeben. Die im Folgenden beispielsweise im Hinblick auf das Verfahren benannten Merkmale lassen sich in dem Füllstandmessgerät implementieren und sind somit auch gleichzeitig Merkmale des Füllstandmessgeräts. Ebenso lassen sich die im Folgenden genannten Merkmale des Füllstandmessgeräts auch als Verfahrensschritte implementieren.

Gemäß einem ersten Aspekt der Erfindung ist ein Füllstandmessgerät zur Mobilitätserkennung eines Echos angegeben, welches eine Recheneinheit zur Bestimmung eines ersten Echo-Kennwertes eines ersten Echos einer Echokurve und zur Bestimmung eines zweiten Echo-Kennwertes eines zweiten Echos der Echokurve aufweist. Die Recheneinheit ist zur Berechnung eines Mobilitätswertes des zweiten Echos der Echokurve unter Verwendung des ersten Echo-Kennwertes (und ggf. auch unter Verwendung des zweiten Echo-Kennwertes) ausgeführt.

Unter dem Begriff Echokurve ist hierbei eine Messkurve zu verstehen, welche beispielsweise die zurückgelegte Distanz des Sende-/Empfangssignals gegen dessen Amplitude aufträgt. Diese Echokurve kann mehrere "Peaks" enthalten, die auf die Behältergeometrie zurückzuführen sind oder mit dem Füllstand korrespondieren. Diese "Peaks" werden im Folgenden Echos genannt.

Unter einem Echo-Kennwert ist die Positionsverschiebung des Echos zu verstehen. Auch kann es sich bei dem Echo-Kennwert um die Breite des Echos, um das Signal-Rauschverhältnis des Echos, den Echoanfang, das Echoende, die Fläche unter dem Echo. etc. handeln.

Unter dem Mobilitätswert eines Echos ist beispielsweise ein Kennwerte eines Echos, welcher unter Berücksichtigung zumindest eines Kennwertes eines weiteren Echos ermittelt wird, zu verstehen. Beispielsweise kann gemäß vorliegender Erfindung ein Kennwert für die Echobewegung, welcher unter Berücksichtigung zeitgleich stattfindender Bewegungen zumindest eines weiteren Echos (oder einer anderweitigen Veränderung des weiteren Echos) ermittelt wird, mit dem Begriff Mobilität bezeichnet werden.

Die verschiedenen Echos können nach jeder Messung klassifiziert werden, so dass ihre zeitliche Entwicklung nachverfolgt werden kann. Hierbei ist vorgesehen, dass Mobilitätswerte der Echos berechnet werden, wobei die Recheneinheit den Mobilitätswert eines zweiten Echos der Echokurve unter Verwendung des ersten Echo-Kennwertes (des ersten Echos) vornimmt.

Auf diese Weise kann erreicht werden, dass Echos, die sich im Vergleich zur vorhergehenden Messung nicht oder nur kaum verändert haben, einen neuen Mobilitätswert zugeteilt bekommen, der unter Berücksichtigung eines sich verändernden Echos berechnet wird. Auf diese Weise ist es möglich, Echos, die sich nicht bewegt haben, durch eine Verringerung ihres Mobilitätswertes "zu bestrafen".

Wenn keines der Echos seinen Kennwert verändert, kann vorgesehen sein, dass keiner der Mobilitätswerte verändert wird.

Gemäß einem weiteren Aspekt der Erfindung ist ein Verfahren zur Mobilitätserkennung eines Echos angegeben, bei dem ein erster Echo-Kennwert eines ersten Echos einer Echokurve bestimmt wird. Weiterhin wird ein zweiter Echo-Kennwert eines zweiten Echos der Echokurve bestimmt. Daraufhin erfolgt eine Berechnung eines Mobilitätswertes des zweiten Echos der Echokurve unter Verwendung des ersten Echo-Kennwertes.

Gemäß einem weiteren Aspekt der Erfindung ist ein Programmelement angegeben, das. wenn es auf einem Prozessor eines Füllstandmessgeräts ausgeführt wird, den Prozessor anleitet, die oben und im Folgenden beschriebenen Schritte durchzuführen. Gemäß einem weiteren Aspekt der Erfindung ist ein computerlesbares Medium angegeben, auf dem ein Programmelement gespeichert ist. das, wenn es auf einem Prozessor eines Füllstandmessgeräts ausgeführt wird, den Prozessor anleitet, die oben und im Folgenden beschriebenen Schritte durchzuführen.

Erfindungsgemäß handelt es sich bei dem ersten Echo-Kennwert um eine erste Positionsverschiebung des ersten Echos in der Echokurve während einem bestimmten Zeitintervall. Bei dem zweiten Echo-Kennwert handelt es sich um eine zweite Positionsverschiebung des zweiten Echos der Echokurve während dem selben Zeitintervall.

Gemäß einem weiteren Ausführungsbeispiel der Erfindung ist die Echokurve zu einem ersten Zeitpunkt gemessen, wobei zur Berechnung des Mobilitätswertes des zweiten Echos der Echokurve nur der erste Echo-Kennwert des ersten Echos verwendet wird, wenn der zweite Echo-Kennwert Null ist bzw. wenn der zweite Echo-Kennwert mit dem entsprechenden Echo-Kennwert der vorhergehenden Messung übereinstimmt.

Gemäß einem weiteren Ausführungsbeispiel der Erfindung wird zur Berechnung des Mobilitätswertes des zweiten Echos der Echokurve nur der erste Echo-Kennwert des ersten Echos verwendet, wenn der zweite Echo-Kennwert darauf hindeutet, dass sich das zweite Echo seit einer vor dem ersten Zeitpunkt gemessenen Echokurve nicht verschoben hat.

Wenn nun also der zweite Echo-Kennwert Null bzw. konstant ist, wird dennoch der Mobilitätswert des zweiten Echos neu berechnet. indem allerdings ausschließlich Kennwerte anderer Echos herangezogen werden.

Gemäß einem weiteren Ausführungsbeispiel der Erfindung führt die Verwendung des ersten Echo-Kennwertes zur Berechnung des Mobilitätswertes des zweiten Echos der Echokurve zu einer Verkleinerung des Mobilitätswertes, wenn sich das zweite Echo seit einer vorhergehenden Messung nicht bewegt hat bzw. der zweite Echo-Kennwert Null ist bzw. sich der zweite Echo-Kennwert seit der vorhergehenden Messung nicht verändert hat.

Gemäß einem weiteren Ausführungsbeispiel der Erfindung wird der Mobilitätswert des zweiten Echos der Echokurve berechnet, indem der erste Echo-Kennwert von einer Mobilitätskennzahl des zweiten Echos subtrahiert wird. Bei dieser Mobilitätskennzahl kann es sich beispielsweise um den vorherigen berechneten Mobilitätswert des zweiten Echos der Echokurve handeln.

Gemäß einem weiteren Ausführungsbeispiel der Erfindung ist die Recheneinheit zur Berechnung eines Mobilitätswertes des ersten Echos der Echokurve unter Verwendung des zweiten Echo-Kennwertes (und ggf. auch des ersten Echo-Kennwertes) ausgeführt.

Somit ist es möglich, die Mobilitätswerte der einzelnen Echos unter Verwendung von Kennzahlen anderer Echos zu berechnen.

Gemäß einem weiteren Ausführungsbeispiel der Erfindung handelt es sich bei dem Füllstandmessgerät um ein Füllstandradar.

Es werden also Echofunktionen (Echokurven) empfangen, wobei die Echofunktionen zumindest zwei Echos einer Echomessung aufweisen. Weiterhin wird zumindest ein Kennwert für jedes der zumindest zwei Echos bestimmt. Daraufhin erfolgt die Bestimmung eines Mobilitätswertes zumindest eines Echos der Echokurve, wobei hierbei zumindest ein Kennwert dieses Echos und zumindest ein Kennwert eines weiteren Echos verwendet werden können.

Kurze Beschreibung der Figuren

Fig. 1 zeigt ein Flussdiagramm einer Echosignalverarbeitung.

Fig. 2 zeigt ein Füllstandmessgerät gemäß einem Ausführungsbeispiel der Erfindung.

Fig. 3 zeigt eine Echoliste.

Fig. 4 zeigt die Wiederholung von Messzyklen bei Entleerung eines Behälters.

Fig. 5 zeigt eine Trackliste.

Fig. 6 zeigt die Ergebnisse einer Bewegungsanalyse.

Fig. 7 zeigt die Wiederholung von Messzyklen bei fehlerhaftem Tracking.

Fig. 8 zeigt Ergebnisse der Bewegungsanalyse bei fehlerhaftem Tracking.

Fig. 9 zeigt ein Ablaufdiagramm zur Mobilitätserkennung gemäß einem Ausführungsbeispiel der Erfindung.

Fig. 10 zeigt ein Ablaufdiagramm zur Aktualisierung fremder Mobilität gemäß einem Ausführungsbeispiel der Erfindung.

Fig. 11 zeigt Verfahrensschritte zur Mobilitätserkennung gemäß einem Ausführungsbeispiel der Erfindung.

Fig. 12 zeigt Ergebnisse der Mobilitätserkennung gemäß einem Ausführungsbeispiel der Erfindung.

Fig. 13 zeigt die Interpretation des Mobilitätswertes gemäß einem Ausführungsbeispiel der Erfindung.

Die Darstellungen in den Figuren sind schematisch und nicht maßstäblich.
In der folgenden Figurenbeschreibung werden für die gleichen oder ähnlichen Elemente die gleichen Bezugsziffern verwendet.

Detaillierte Beschreibung von Ausführungsbeispielen

Die vorliegende Erfindung bezieht sich auf ein Verfahren zur Messung von Füllständen aller Art.

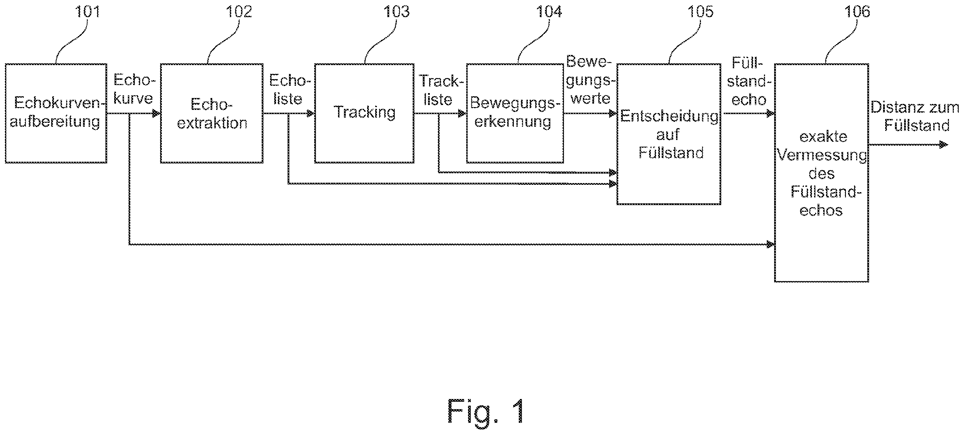

Fig. 1 zeigt den grundsätzlichen Ablauf der Echosignalverarbeitung innerhalb eines kommerziellen Füllstandmessgerätes.
Im Block "Echokurvenaufbereitung" 101 sind alle Hard- und Softwareeinheiten enthalten, die benötigt werden, um eine Echokurve als Abbild der aktuellen Reflexionsverhältnisse innerhalb eines Behälters bereitzustellen. Die Echokurve wird vorzugsweise in digitaler Form innerhalb eines Mikroprozessorsystems erfasst, und mit Hilfe bekannter Verfahren auf darin enthaltene Echos untersucht.
Die innerhalb des Blocks "Echoextraktion" 102 zu diesem Zweck angewendeten Verfahren umfassen insbesondere Verfahren aus dem Bereich der schwellwertbasierenden Echoextraktion oder auch Verfahren auf Basis einer skalenbasierenden Echoextraktion. Nach Abarbeitung des Echoextraktionsverfahrens wird eine digitale Echoliste bereitgestellt, die vorzugsweise Angaben zu Anfang, Ort und Ende eines oder mehrerer in der Echokurve enthaltenen Echos beinhaltet.
Um die Zuverlässigkeit der Echosignalverarbeitung eines Füllstandmessgerätes weiter zu erhöhen, werden die gefundenen Echos innerhalb des Blocks "Tracking" 103 in einen historischen Kontext gestellt. Die dabei verwendeten Verfahren entstammen dem aktuellen Stand der Technik. So können beispielsweise Verfahren auf Basis des Munkres Algorithmus vorteilhaft eingesetzt werden. Innerhalb des Tracking wird insbesondere der Verlauf des Ortes eines Echos über mehrere Einzelmessungen hinweg verfolgt, und diese gesammelte Information in Form eines Tracks im Speicher repräsentiert. Die gesammelten Historieninformationen mehrerer Echos werden in Form einer Trackliste nach außen hin bereitgestellt.
Aufbauend auf der übergebenen Trackliste wird im Block "Bewegungserkennung" 104 eine Analyse der Trackliste auf kontinuierliche Veränderungen eines Echokennwertes, beispielsweise des Echoortes, durchgeführt. Die Ergebnisse dieser Analyse werden in Form von Bewegungswerten nach außen hin bereitgestellt.

Im Block "Entscheidung auf Füllstand" 105 werden die Daten der aktuellen Echoliste, die Informationen über den zeitlichen Verlauf einzelner Echos und die Ergebnisse der Bewegungserkennung miteinander abgeglichen. Von besonderer Bedeutung ist hierbei die Auswertung des zeitlichen Verlaufes des Ortes auf Basis der in Form von Tracks erfassten Historieninformationen der Echos.

Um die Genauigkeit der Füllstandmessung weiter zu verbessern, kann die Position des bestimmten Füllstandechos durch den optionalen Block "exakte Vermessung des Füllstandechos" 106 unter Anwendung rechenzeitintensiver Verfahren, beispielsweise Interpolationsverfahren, mit hoher Genauigkeit bestimmt werden.

Die bestimmte Distanz zum Füllstand wird nach außen hin bereitgestellt. Die Bereitstellung kann analoger Form (4..20 mA Schnittstelle) oder auch in digitaler Form (Feldbus) realisiert werden.

Im Folgenden werden Möglichkeiten genannt, wie das vom Füllstand erzeugte Echo (Nutzecho) identifiziert werden kann:

Innerhalb einer vom Benutzer manuell zu initiierenden Störechospeicherung können Störreflexionen 209, 210 von Behältereinbauten vom Sensor erfasst, und für die weitere Verarbeitung in geeigneter Form in einem Speicherbereich abgelegt werden.

Beispielsweise kann unter einer vorliegenden Anzahl an Echos einer Echokurve genau das Echo als Nutzecho ausgewertet werden, welches sich in aufeinanderfolgenden Empfangsphasen kontinuierlich zeitlich verschiebt. Sollten sich mehrere Echos in aufeinanderfolgenden Empfangsphasen zeitlich verschieben, so wird unter den sich bewegenden Echos das mit der geringsten Entfernung zum Sensor als Nutzecho identifiziert.

Auch kann ein System zum Tracking implementiert werden, in dem Echos zu globalen Echogruppen zusammengefasst werden, und in dem charakteristische Kennwerte der Tracks aus der örtlichen Verschiebung der zum jeweiligen Track gehörenden Echos errechnet werden.

Ebenso ist es möglich, die Distanz zur Füllgutoberfläche in zeitlich aufeinanderfolgenden Messzyklen zu erfassen, und durch Differenzbildung einen Kennwert für die Ausbreitungseigenschaften zu errechnen.

Beispielsweise kann die Bewegungsgeschwindigkeit eines Tracks auf Basis einer Kalman - Filterung geschätzt werden.

Die Vorteile der vorliegenden Erfindung ergeben sich aus den speziellen Randbedingungen, denen die Echosignalverarbeitung innerhalb eines Füllstandmessgerätes unterliegt.

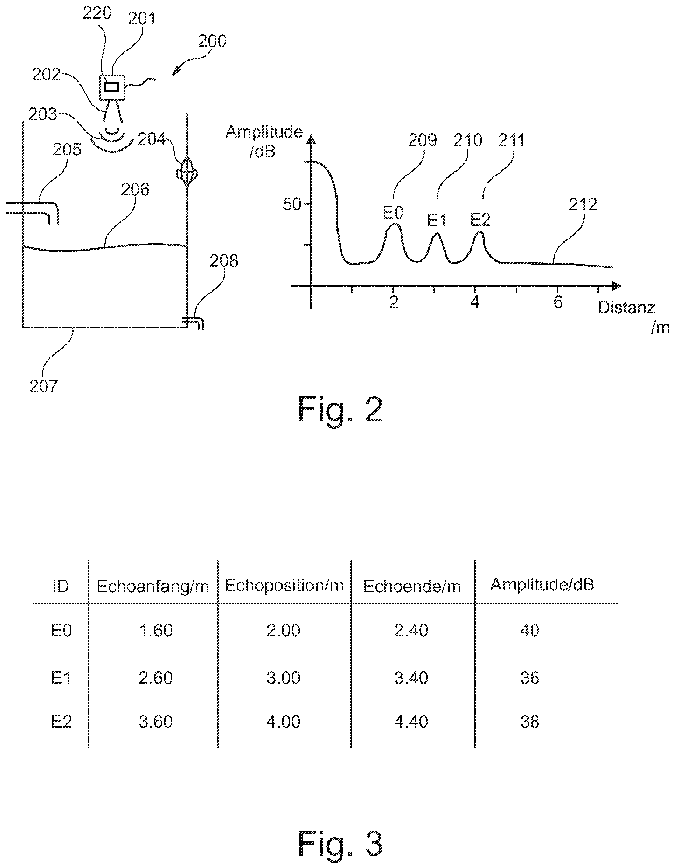

Fig. 2 zeigt ein Ausführungsbeispiel für ein derartiges Gerät.

Das Füllstandmessgerät 201 strahlt über die Antenne 202 ein Signal 203 in Richtung des zu vermessenden Mediums 206 ab. Das Füllstandmessgerät selbst kann nach dem Ultraschall, Radar, Laser oder dem Prinzip der geführten Mikrowelle die Distanz zum Medium ermitteln. Als Signale kommen dementsprechend sowohl Ultraschallwellen als auch elektromagnetische Wellen in Betracht. Das Medium 206 reflektiert die auftreffende Welle zurück zum Messgerät, wo diese empfangen und verarbeitet wird. Gleichzeitig wird das abgestrahlte Signal auch von Behältereinbauten, beispielsweise einem Behälterzustieg 204 oder einem Zuflussrohr 205 reflektiert. Die im Füllstandmessgerät 201 empfangene Echokurve 212 kann somit neben dem vom Füllstand 206 hervorgerufenen Nutzecho 211 auch Echos von fest eingebauten Störstellen 209, 210 enthalten, welche nachfolgend als Störechos bezeichnet werden. Der Füllgutbehälter 207 besitzt neben dem Zulaufrohr 205 auch ein Ablaufrohr 208, dessen Reflexionen im vorliegenden Fall vernachlässigt werden können.

Innerhalb der nun anlaufenden Signalverarbeitung durch die Recheneinheit 220 wird die Echokurve gezielt auf Echos hin untersucht 102. Als Ergebnis der Echoextraktion wird eine Echoliste nach dem Schema der Fig. 3 erzeugt. Die Echoliste kann neben den charakteristischen Kennwerten des vom Behälterzustieg 204 erzeugten Störechos E0, 209 ein weiteres vom Zuflussrohr 205 erzeugtes Störecho E1, 210 sowie das vom Medium 206 erzeugte Füllstandecho E2, 211 beinhalten.

Selbstverständlich stellen die dargestellten Merkmale der Echoliste lediglich eine spezielle Implementierung einer Echoliste dar. In der Praxis sind auch Echolisten mit weiteren oder veränderten Merkmalen eines Echos gebräuchlich.

Es sei an dieser Stelle bereits darauf hingewiesen, dass die Verarbeitung der Echokurve 212 mit dem Ziel, das vom Füllstand erzeugte Echo zu identifizieren, eine besondere Herausforderung darstellt, da drei Echos mit nahezu identischer Amplitude aufzufinden sind.

Nachfolgend werden Verfahrensschritte, welche auch im Rahmen der vorliegenden Erfindung Verwendung finden, unter Verweis auf die Figuren näher beschrieben.

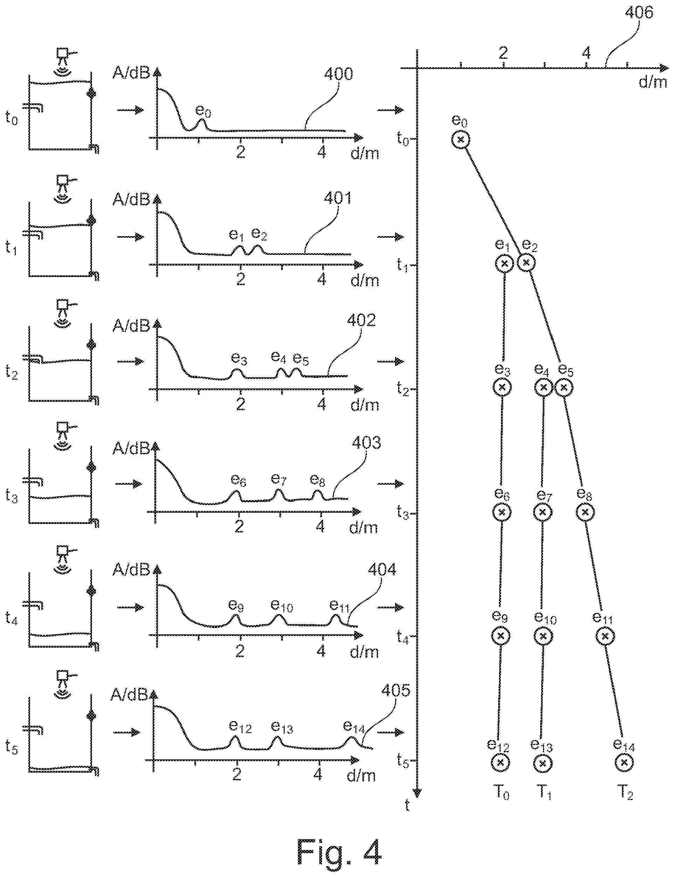

Werden in einem Füllstandmessgerät zyklische Messzyklen implementiert, so ergibt sich daraus eine Folge von empfangenen Echokurven, wie sie in Fig. 4 dargestellt wird. Beispielhaft sind sechs unabhängige Messzyklen im zeitlichen Abstand von jeweils fünf Minuten dargestellt. Selbstverständlich sind aber auch deutlich schnellere Messzyklen, beispielsweise im Abstand von 1 Sekunde, realisierbar.

Das dargestellte Szenario zeigt die Verhältnisse beim Entleeren eines Behälters 207. Zu jedem der Zeitpunkte t0, t1, t2, t3, t4 und t5 wird ein Messzyklus des Füllstandmessgerätes 201 initiiert. Nach dem Empfangen der jeweiligen Echokurve 400, 401, 402, 403, 404, 405 wird diese mit bekannten Verfahren auf Echos hin untersucht.

Um den Verlauf der einzelnen Echos über mehrere solcher Messzyklen hinweg verfolgen zu können, können auf Basis der erzeugten Echoliste im weiteren Verfahrensablauf spezialisierte Algorithmen zum Einsatz kommen, welche in der Literatur unter dem Begriff "Tracking" ausführlich beschrieben werden. Selbstverständlich mag es auch möglich sein, den Verlauf einer Kenngröße (z.B. Ort) eines oder mehrerer Echos auf andere Art und Weise zu bestimmen.

Im vorliegenden Beispiel wird der Verlauf der vom Behälterzustieg 204 verursachten Echos e1, e3, e6, e9 und e12 durch einen gemeinsamen Track T0 beschrieben. Zudem wird der Verlauf der vom Zuflussrohr 205 verursachten Echos e4. e7, e10, e13 durch den zugehörigen Track T1 beschrieben. Der Verlauf der vom Füllgut (206) verursachten Echos über mehrere Messzyklen hinweg wird durch den Track T2 beschrieben, welcher aus den Echos e0, e2, e5. e8, e11 und e14 besteht.

Im Rahmen der Abarbeitung eines Trackingalgorithmus wird zum Zeitpunkt t0 der Track T2 initialisiert, und zu den Zeitpunkten t1, t2, t3, t4 und t5 fortlaufend erweitert. Entsprechend wird zum Zeitpunkt t1 der Track T0 initialisiert, und zu den Zeitpunkten t2, t3, t4 und t5 fortlaufend erweitert. Die Trackliste erweitert sich abermals zum Zeitpunkt t2, zu welchem der Track T1 initialisiert wird. Auch dieser wird zu den Zeitpunkten t3, t4 und t5 fortlaufend erweitert.

Die Darstellung des Verlaufes von Echos, welche eine gemeinsame Reflexionsstelle als Ursache haben, in Form eines Tracks ist in der Literatur beschrieben, und wird auch in anderen Bereichen, beispielsweise der Luftraumüberwachung, nutzbringend angewendet.

Nach Abschluss des Tracking 103 werden die gefundenen Tracks zu jedem der Zeitpunkte t0 ... t5 in Form einer Trackliste bereitgestellt.

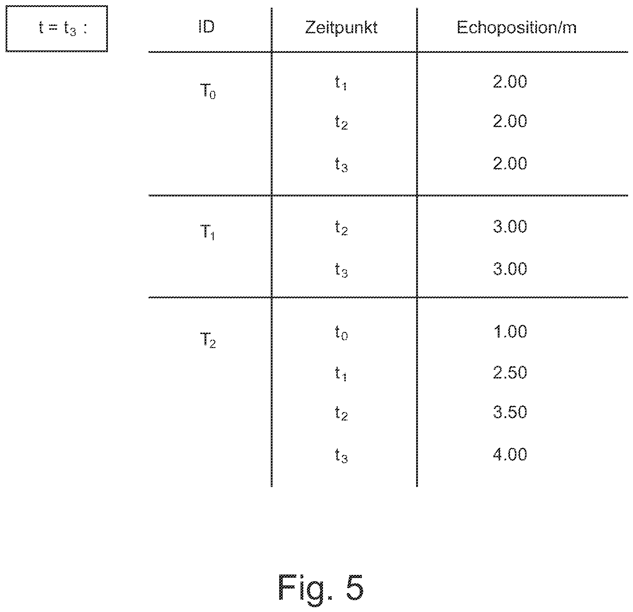

Fig. 5 zeigt beispielhaft eine Trackliste, wie sie sich aus der obigen Folge von Echokurven zum Zeitpunkt t3 ergeben würde. Es sei wiederum darauf hingewiesen, dass die dargestellten Parameter der Trackliste eine vorteilhafte Auswahl möglicher charakteristischer Merkmale der zu Grunde liegenden Echos darstellen. Selbstverständlich können auch zusätzliche oder veränderte Merkmale innerhalb einer solchen Trackliste verfolgt werden.

Die in Fig. 5 gezeigte Trackliste repräsentiert das Ergebnis des TrackingAlgorithmus zum Zeitpunkt t3. Selbstverständlich wird diese Liste nach Abarbeitung des Trackings zum Zeitpunkt t4 aktualisiert und erweitert, so dass beispielsweise Track T2 eine neue Stützstelle bei 4.50 m aufweisen wird.

Aufbauend auf der im jeweiligen Messzyklus errechneten Trackliste wird eine Bewegungsanalyse 104 durchgeführt, welche Bewegungswerte zu den in der Trackliste enthaltenen Tracks bereitstellt. Naheliegende Methode zur Erfassung von Bewegungen der vorliegenden Tracks ist die fortlaufende Addition der Einzelbewegungswerte zwischen den Stützstellen der Tracks. Es ergibt sich folgende Berechnungsvorschrift für die Bewegung B:

$$B(T_i) = \begin{cases} \sum_{K=1}^{N-1} |Position(St\ddot{u}tzstelle\ k) - Position(St\ddot{u}tzstelle\ k + 1)| & falls\ N > 1 \\ 0 & sonst \end{cases}$$

(G1)

wobei N die Anzahl an Stützstellen des Tracks zum Zeitpunkt $T_i$ bezeichnet.

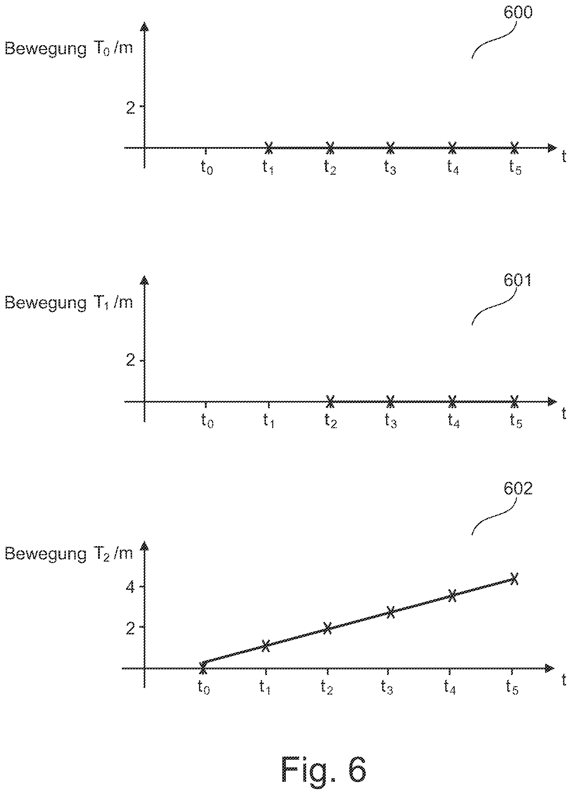

Fig. 6 zeigt die Ergebnisse der nach obigem Schema durch Differenzenbildung errechneten Bewegungswerte für das Beispiel aus Fig. 4. Es sei an dieser Stelle darauf hingewiesen, dass die Ermittlung von Bewegungen nach obigem Schema nur eine Variante darstellt.

Dem Bewegungsgraphen 600 für den Track T0 ist zu entnehmen, dass die Bewegungsanalyse zum Zeitpunkt t0 keinerlei Ergebnis liefert. Dies wird durch einen Vergleich mit dem Trackinggraphen 406 sofort plausibel, wird der Track T0 doch erst zum Zeitpunkt t1 initialisiert. Die während weiterer Messzyklen zu den Zeitpunkten t1, t2, t3, t4 und t5 nach obiger Formel errechneten Bewegungswerte verharren konstant auf 0, was genau der auf die jeweiligen Positionswerte des Tracks T0 bezogenen Stationarität entspricht.

Die Ergebnisse der Bewegungsanalyse 104 zu Zeitpunkten t0 ... t5 für den Track T1 sind im Bewegungsgraphen für den Track T1 601 dargestellt. Der Darstellung ist zu entnehmen, dass der Track t1 zum Zeitpunkt t2 beginnt, und zu den Zeitpunkte t3, t4 und t5 keinerlei Bewegung aufweist. Dies stimmt wiederum mit der Stationarität des Tracks T1 in Graphik 406 überein.

Dem Trackinggraphen 406 kann als auffälliges Merkmal entnommen werden, dass Track T2 eine ausgeprägte Bewegung aufweist. Die von der Bewegungserkennung 106 zu den Zeitpunkten t0 bis t5 nach obiger Formel ermittelten Bewegungswerte sind im Bewegungsgraphen für den Track T2 602 dargestellt. Während bei der Initialisierung des Tracks zum Zeitpunkt t0 noch keine Bewegung erkannt werden kann, wird durch die fortlaufende Summation der Einzelbewegungen von Messung zu Messung das Bewegungsmaß für den Track kontinuierlich erhöht.

Zweck und Ziel der Bewegungserkennung ist, zusätzliche Informationen für den Verfahrensschritt "Entscheidung auf Füllstand" 105 bereitzustellen. Gemäß DE 42 343 00 A1 ist das vom Füllgut verursachte Nutzecho genau dadurch gekennzeichnet, dass es unter den Echos mit Bewegung größer null genau dasjenige ist, welches sich in geringster Entfernung zum Sensor 201 befindet. Die von der Bewegungserkennung 104 errechneten Kennwerte 600, 601, 602 ermöglichen diesem Algorithmus folgend eine sichere Erkennung des Füllstandechos 211 ab dem Zeitpunkt t1. Nach Abschluss des zugehörigen Messzyklus wird von der Bewegungserkennung 104 eindeutig errechnet, dass Track T2 eine Bewegung größer 0 aufweist 602.

Die Entscheidung auf Füllstand kann anhand der dargestellten Situation ohne eine vorab durchzuführende Störechospeicherung erfolgen. Die gewichtige Rolle der Bewegungserkennung zur Identifikation des korrekten Füllstandechos in einem kommerziellen Füllstandmessgerät wird sofort ersichtlich, und gewinnt mit dem Bestreben einer Sensorinstallation gemäß dem Prinzip "plug and play", d.h. ohne besondere Inbetriebnahme durch den Benutzer zunehmend an Bedeutung.

Dennoch ist es wünschenswert, das oben dargestellte Verfahren weiter zu verbessern. Gründe hierfür sind die Folgenden:

Bedingt durch ständig wechselnde Reflexionsverhältnisse aufgrund unterschiedlicher Füllgüter und / oder Schüttlagen, äußere Einflüsse wie Störungen durch elektromagnetische Wellen, Verschmutzungen der Antenne und weitere Einflüsse kann die Stabilität der empfangenen Echokurven in Bezug auf ihren Amplitudenverlauf nicht realisiert werden. Das führt in der Praxis zu dem Problem, dass Echos von identischen Reflexionsstellen 204, 205, 206 sowohl in ihrer Form, als auch in ihrer Amplitude von Messzyklus zu Messzyklus mitunter massiven Schwankungen unterworfen sind. Dem Fachmann wird daraus sofort ersichtlich, dass auch die Funktionalität des Trackings 103 aufgrund der instabilen Echodaten beeinträchtigt werden kann. In der Praxis kommt es daher immer wieder zu Fehlzuordnungen von aktuellen Echos zu den bestehenden Tracks.

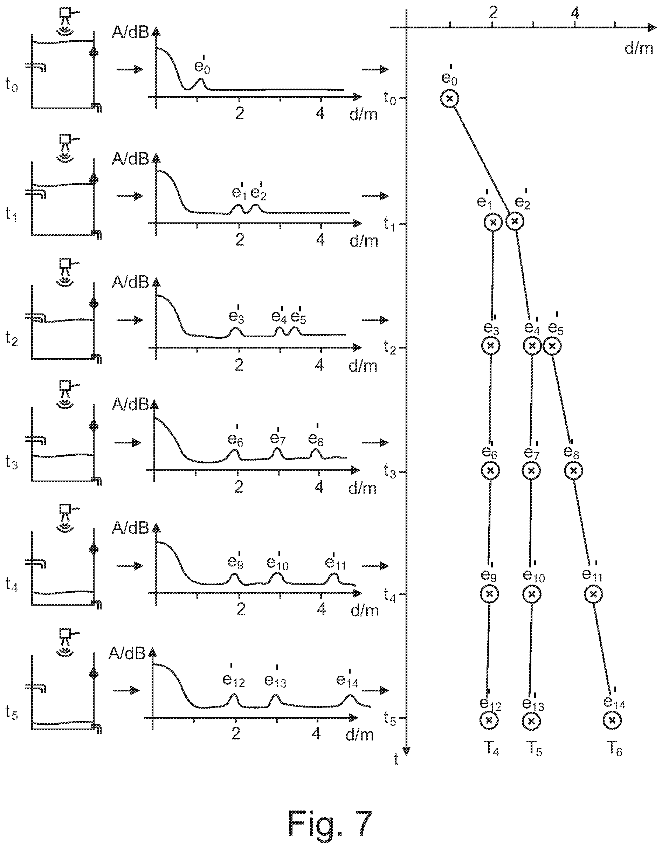

Fig. 7 stellt die Verhältnisse dar, wie sie sich aufgrund einer einzigen Fehlzuordnung entwickeln können.

Das dargestellte Szenario einer Entleerung des Behälters 207 entspricht prinzipiell dem aus Fig. 4, wobei sich die exakten Kennwerte der Echos e'$_0$ bedingt durch äußere Einflüsse jedoch leicht verändert haben. Aufgrund dieser Veränderung kommt es zum Zeitpunkt t2 zu einer anderen Zuordnung von Echos zu Tracks. Echo e'$_4$ wird nun dem Track T5 zugewiesen, was zur Folge hat, dass Echo e'$_5$ einen neuen Track T6 initialisiert.

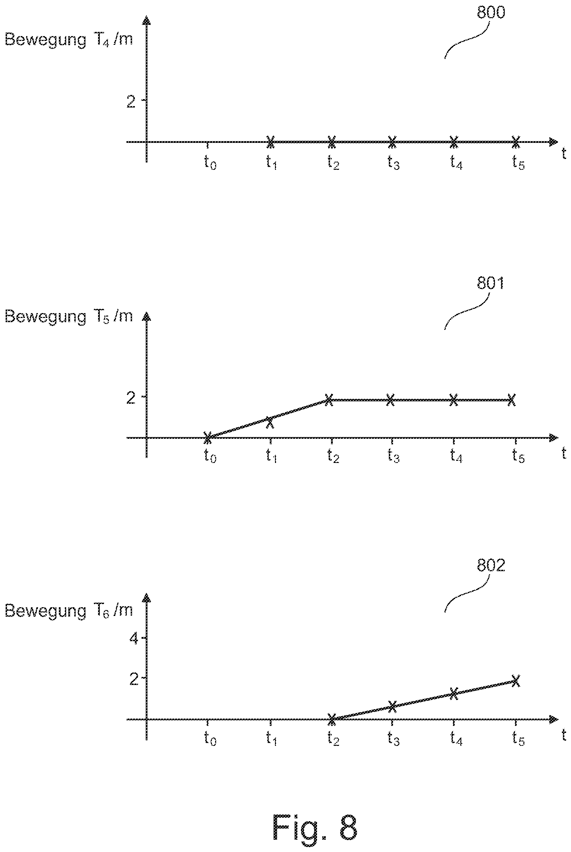

Fig. 8 zeigt die Ergebnisse der Bewegungsanalyse gemäß dem oben dargestellten, dem Stand der Technik entsprechenden Verfahren. Es wird sofort ersichtlich, dass Track T5 seine Bewegungswerte, die er zu den Messzyklen zu den Zeitpunkten t0, t1 und t2 aufsummiert hat, konstant beibehält. Folglich wird dem Track T5 auch während der Zeitpunkte t3. t4 und t5 eine ausgeprägte Bewegung bescheinigt. Wendet man zur Identifikation des vom Füllgut verursachten Nutzechos nun ein Verfahren gemäß DE 42 343 00, so werden ab dem Zeitpunkt t2 fälschlicherweise die Echos e'$_4$, e'$_7$, e'$_{10}$. sowie e'$_{13}$ als Nutzecho ausgegeben, gehören sie doch einem Track (T5) an, welcher eine ausgeprägte Bewegung aufweist, und sich in geringster Entfernung zum Sensor befindet.

Es sei an dieser Stelle angemerkt, dass das Problem bisheriger Bewegungserkennungsverfahren auch dann auftritt, wenn mit Kalman-Filtern oder sonstigen Verfahren eine singuläre Betrachtung der Bewegung eines einzigen Tracks durchgeführt wird.

Als Lösung dieses Problems kann versucht werden, die Bewegungsanalyse nach obigem Schema nur über M zurückliegende Stützstellen eines jeden Tracks zu berechnen, beispielsweise M = 5.

Zudem ist es auch möglich, die ermittelten Bewegungswerte über eine Glättungsfunktion gegen den Bewegungswert 0 hin zu erodieren, wenn keine neuerlichen Bewegungswerte eine Auffrischung des bislang erreichten Bewegungswertes realisieren.

Beide Vorgehensweisen können im Umfeld einer Füllstandmessung jedoch zu unbefriedigenden Ergebnissen führen. In einem typischen Fall wird beispielsweise eine Anlage von Montag bis Freitag innerhalb einer Produktionsanlage befüllt und wieder entleert, so dass über die Zeit hinweg Bewegungserkenntnisse zu den einzelnen Tracks innerhalb des Sensors gesammelt werden. Wird innerhalb der Anlage nun über das Wochenende nicht gearbeitet, so gehen aufgrund von fehlenden neuen Bewegungswerten die bislang gesammelten Informationen über die Bewegung der einzelnen Tracks nach und nach verloren, und das, obwohl sich an den Echoverhältnissen innerhalb der Anlage nichts verändert hat.

Der vorliegenden Erfindung liegt die Aufgabe zu Grunde, eine robuste Methode zur Erkennung von zeitlichen Veränderungen charakteristischer Kennwerte eines oder mehrerer Echos innerhalb eines Füllstandmessgerätes bereitzustellen. Beispielsweise bezieht sich die Erkennung von Veränderungen auf die Position der untersuchten Echos oder Tracks, es mag aber auch möglich sein, das Verfahren auf andere Kennwerte anzuwenden.

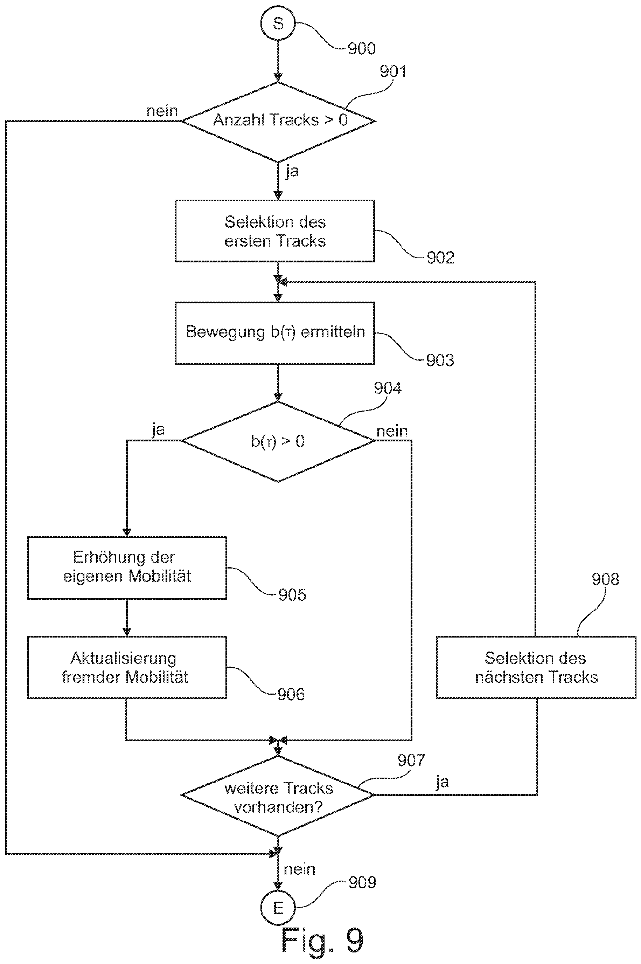

Fig. 9 zeigt den grundsätzlichen Ablauf des Verfahrens 104, welches im Verlauf eines jeden Messzyklus beispielsweise im Anschluss an die Tracking-Funktion 103 aufgerufen wird. Das Verfahren beginnt im Startzustand 900. Im Verfahrensschritt 901 wird untersucht, ob in der Trackliste überhaupt Tracks enthalten sind. Ist die Trackliste leer, so endet das Verfahren unmittelbar im Endezustand 909. Ist hingegen zumindest ein Track enthalten, so wird dieser im Schritt 902 zum aktuell untersuchten Track bestimmt (selektiert). Im Schritt 903 wird der seit der letzten Analyse neu hinzugekommene Bewegungswert $b(T_i)$ (hier: b(T$_1$), da es sich um den ersten Track handelt) zum Beispiel nach folgender Geleichung ermittelt:

7

$$b(Ti) = \left\{ \begin{array}{ll} |Position(e_N) - Position(e_{N-1})| falls\ N\ >1 \\ 0 \qquad\qquad sonst \end{array} \right. \qquad (G2)$$

wobei $e_N$ die aktuell hinzugekommene Stützstelle des Tracks und $e_{N-1}$ die im letzten Messzyklus dem Track hinzugefügte Stützstelle markiert. N bezeichnet die laufende Nummer der Messung und i die laufende Nummer des Tracks.

Ist der neu hinzugekommene Bewegungswert $b(T_i)$ größer null, so wird im Verfahrensschritt 905 der eigene Mobilitätswert des aktuell selektierten Tracks um die ermittelte Bewegung $b(T_i)$ erhöht. Vorzugsweise wird der Mobilitätswert eines Tracks, der über mehrere Messzyklen hinweg immer wieder aktualisiert werden muss, als zusätzliche Spalte in einer Trackliste nach dem Schema der Fig. 5 verwaltet, wobei zum Initialisierungszeitpunkt eines Tracks ein Mobilitätswert von 0 postuliert wird.

Im Verfahrensschritt 906 wird als Kernaspekt der vorliegenden Erfindung der aktuell ermittelte Bewegungswert $b(T_i)$ dazu benutzt, die Mobilitätswerte der anderen, gleichzeitig verwalteten Tracks zu aktualisieren.

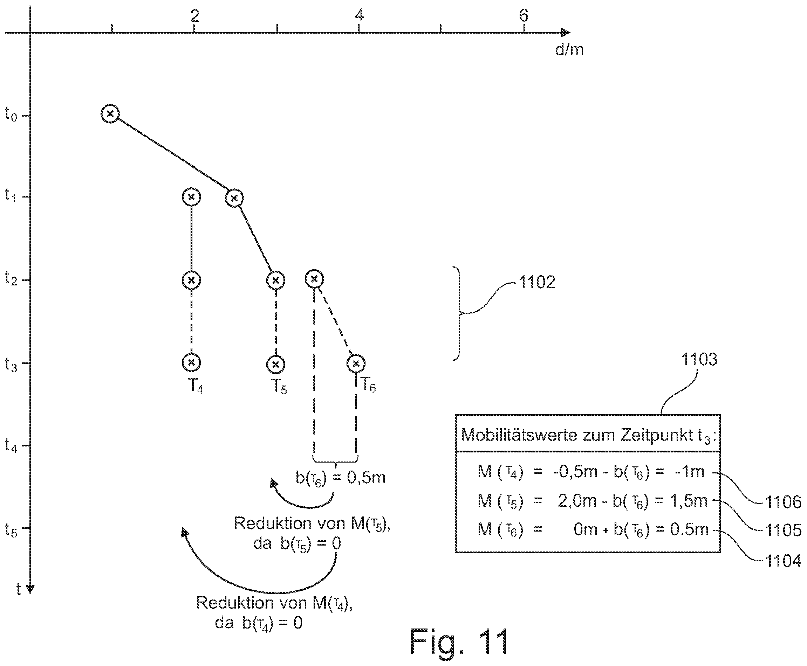

Fig. 11 zeigt anschaulich den Grundgedanken des Verfahrens. Ausgehend von den Mobilitätswerten zum Zeitpunkt t2 der letzten Messung (M(T4) = -0,5 m; M(T5) = 2,0 m; M(T6) = 0 m) startet ein erneuter Durchlauf der Bewegungserkennung zum Zeitpunkt t3 der aktuellen Messung.

Der Mobilitätswert M(T4) zum Zeitpunkt t2 (der -0,5 m beträgt) ergibt sich hierbei aus dem bisherigen Mobilitätswert von T4 zum Zeitpunkt t1 (der Null ist, da T4 zu diesem Zeitpunkt zum ersten Mal auftaucht) abzüglich b(T5) zum Zeitpunkt t2.

Als aktuell zu untersuchender Bewegungszeitraum 1102 ergibt sich der zurückliegende Zeitraum seit der letzten Durchführung der Bewegungsanalyse zum Zeitpunkt t2. Es wird unmittelbar ersichtlich, dass die Tracks T4 und T5 im betrachteten Zeitraum 1102 keine Bewegung vollziehen, also b(T4) = 0 und b(T5) = 0. Der Track T6 zeigt hingegen im betrachteten Zeitraum 1102 eine Bewegung b(T6) = 0,5 m. Gemäß Verfahrensschritt 905 (siehe Fig. 9) erfolgt zunächst eine Erhöhung der eigenen Mobilität des Tracks T6 1104 um den ermittelten Bewegungswert.

Im Verfahrensschritt 906 wird nun die Mobilität fremder Tracks aktualisiert. Algorithmische Begründung dieses Verfahrensschrittes ist die besondere Situation im Rahmen der Füllstandmessung. Es können allgemein zwei Zustände unterschieden werden. Im stationären Zustand erfolgt weder eine Befüllung noch eine Entleerung eines Füllstandbehälters. Folglich müssen alle vorhandenen Echos / Tracks eine auf ihren Ort bezogene Stationarität aufweisen. Im dynamischen Zustand erfolgt eine Veränderung des Füllstandes durch Befüllung und / oder Entleerung. Folglich müssen alle Echos, die in irgend einer Weise vom Füllstandecho abhängen (Füllstandecho, Mehrfachechos, Bodenecho), im gleichen Zeitraum ein auf den Ort bezogenes dynamisches Verhalten aufweisen. In anderen Worten kann man sagen, alle Echos, die keine Störechos sind, müssen sich gleichzeitig bewegen. Bewegt sich ein Echo innerhalb eines Zeitraumes im dynamischen Zustand nicht, so ist es als Störecho zu betrachten.

Da Track 4 im aktuell untersuchten Bewegungszeitraum 1102 keine Mobilität aufweist, gleichzeitig aber Track T6 eine deutliche gleichzeitig auftretende Bewegung zeigt (dynamischer Zustand), wird die Behauptung, Track 4 wäre stationär, durch Subtraktion des Bewegungswertes von Track T6 gefestigt 1106. In gleicher Weise wird der Mobilitätswert des Tracks T5 durch Subtraktion des Bewegungswertes von Track T6 verringert 1105. Track T5 zeigte bislang eine deutliche Mobilität, die nun aber vom Verfahren in Frage gestellt wird, da er sich nicht mehr gleichzeitig mit dem Track T6 bewegt. Im weiteren Fortgang des Verfahrens wird auf diese Weise die Mobilität des Tracks T5 mehr und mehr reduziert, bis schließlich auf Stationarität von T5 geschlossen werden kann.

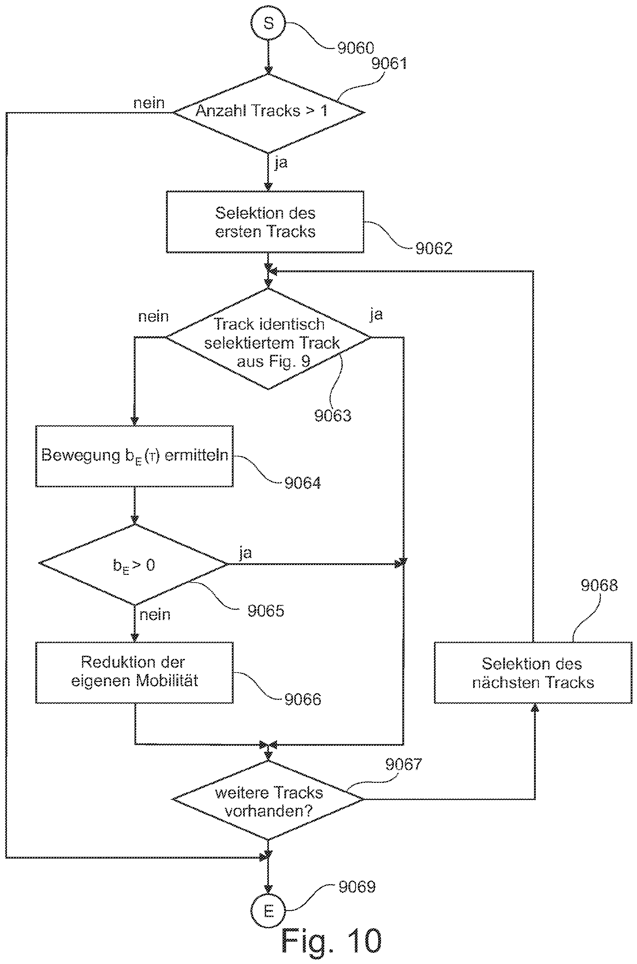

Fig. 10 zeigt den exakten Ablauf der Aktualisierung fremder Tracks. Der Verfahrensschritt beginnt im Zustand 9060. Zunächst wird überprüft, ob außer dem aktuell betrachteten Track aus Fig. 9 noch weitere Tracks in der Trackliste enthalten sind. Ist dies der Fall, so wird für alle Tracks der Trackliste, welche nicht dem aktuell betrachteten Track aus Fig. 9 entsprechen, die aktuelle eigene Bewegung $b_E$ entsprechend der Vorgehensweise aus Gleichung (G2) bestimmt 9064. Ist diese eigene Bewegung gleich null, so erfolgt im Verfahrensschritt 9066 eine Reduktion der eigenen Mobilität um den aktuell ermittelten Bewegungswert aus Verfahrensschritt 903. Schritt 9066 kann anhand der Fig. 11 in 1106 und 1105 nachvollzogen werden. In entsprechender Weise werden gemäß dem Ablaufdiagramm aus Fig. 11 alle fremden Mobilitätswerte 1105, 1106 aktualisiert. Im Gegensatz zu bisherigen Verfahren zur Bewegungserkennung liefert das vorliegende Verfahren keine Bewegungs- sondern Mobilitätswerte.

Erfindungsgemäß soll unter Bewegung eine anhand der singulären Betrachtung eines einzelnen Tracks ermittelte Information bezüglich der Veränderung einer physikalischen Größe (z.B. Ort) verstanden werden. Mit dem Begriff Mobilität wird gemäß der vorliegenden Erfindung eine gleichzeitige Betrachtung einer Vielzahl von Echos und / oder Tracks verbunden, welche zum Ziel hat, Veränderungen einer physikalischen Größe (z.B. Ort) im Kontext dessen zu betrachten, wie sich korrespondierende Größen in anderen Echos / Tracks verhalten.

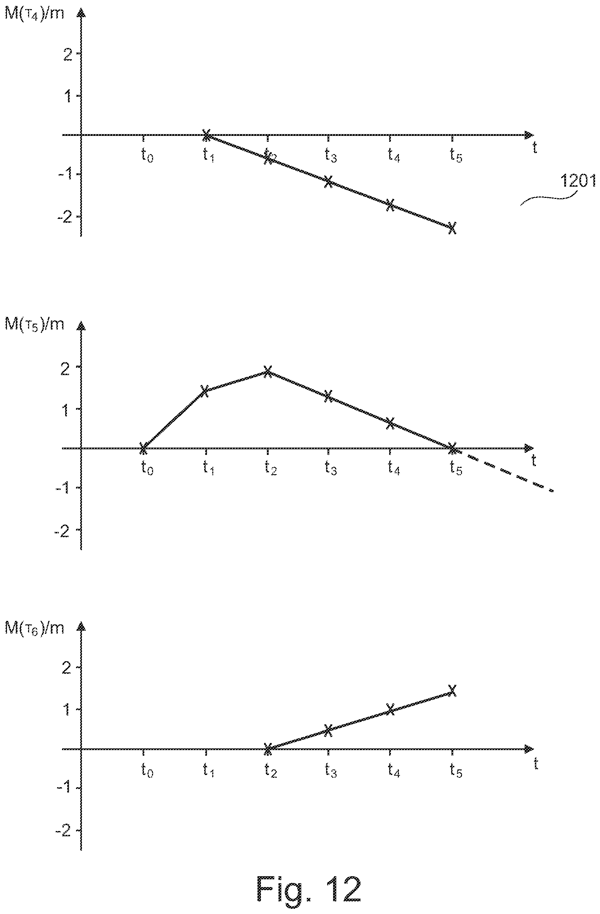

Fig. 12 zeigt die Mobilitätswerte, wie sie sich zu den Zeitpunkten t0 ... t5 durch Anwendung des erfindungsgemäßen Verfahrens ergeben. Es ist deutlich zu sehen, dass die Mobilität von Track 5 -verursacht durch die Bewegung des Tracks T6- im Zeitraum zwischen t2 und t5 komplett revidiert wird. Es sei zudem darauf hingewiesen, dass bei stationärem Verhalten aller Echos / Tracks selbstverständlich keine Reduktion der einmal ermittelten Mobilitätswerte erfolgt.

Anhand der Fig. 12 wird sofort ersichtlich, dass gemäß dem vorliegenden Verfahren negative Mobilitätswerte entstehen können 1201. Diese verfahrensbedingte Eigenschaft kann dazu benutzt werden, den Begriff der Mobilität neu zu interpretieren.

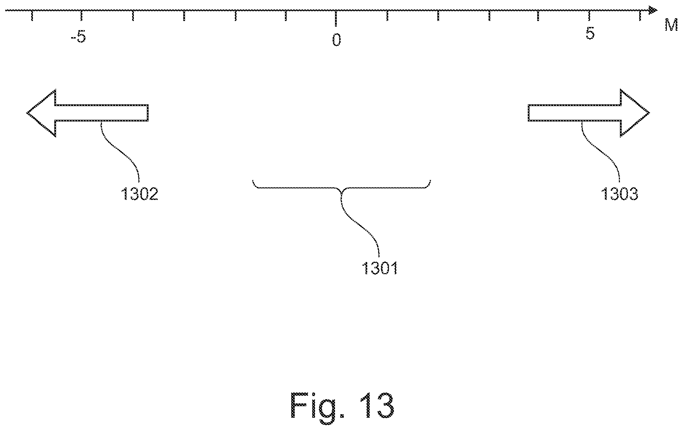

Fig. 13 zeigt eine entsprechende Interpretationsvariante, wobei die beispielhaft dargestellten Skalierungswerte frei gewählt werden können. Liegt der Mobilitätswert im Bereich von 0, siehe Bezugszeichen 1301 (beispielsweise nach der Initialisierung eines neuen Tracks), so können keinerlei gesicherte Informationen zur Bewegung dieses Echos / Tracks bereitgestellt werden. Sowohl eine Behauptung, das Echo / der Track würde sich bewegen, als auch eine Behauptung, das Echo / der Track wäre stationär, entbehren jeglicher Grundlage. Liegt der Mobilitätswert im negativen Bereich 1302, so kann mit zunehmender Sicherheit von einer ausgeprägten Stationarität des entsprechenden Tracks ausgegangen werden. Entsprechend kann bei einer positiven Mobilität 1303 von einer ausgeprägten Dynamik des Tracks ausgegangen werden.

Sollte der Block "Entscheidung auf Füllstand" 105 nicht in der Lage sein, Mobilitätswerte der Bewegungserkennung 104 korrekt zu interpretieren, so kann in naheliegender Weise die Mobilitätserkennung in der Art modifiziert werden, dass die Mobilität M in eine Bewegung B überführt wird. Denkbar wäre beispielsweise eine Transformation nach folgendem Schema:

$$B(T_i) = \begin{cases} M(Ti) & falls\ M > 0 \\ 0 & sonst \end{cases} \quad (G3)$$

Es sei jedoch darauf hingewiesen, dass in diesem Fall die Erkenntnisse über gesicherte Stationarität nicht weiter verwendet werden können.

Das oben beschriebene Verfahren ermöglicht eine robuste Erkennung von Mobilitätswerten von Echos / Tracks innerhalb eines Füllstandmessgerätes, und bietet neben der Toleranz bei Fehlzuordnungen von Tracks insbesondere auch Vorteile während der Zeiträume, in denen eine Anlage nicht aktiv in Betrieb ist, beispielsweise über das Wochenende.

Ergänzend sei darauf hingewiesen, dass "umfassend" und "aufweisend" keine anderen Elemente oder Schritte ausschließt und "eine" oder "ein" keine Vielzahl ausschließt. Bezugszeichen in den Ansprüchen sind nicht als Einschränkungen anzusehen.

**Patentansprüche**

**1.** Füllstandmessgerät zur Mobilitätserkennung eines Echos, das Füllstandmessgerät (200) aufweisend:

eine Recheneinheit (220) zur Bestimmung einer ersten Positionsverschiebung eines ersten Echos einer Echokurve und zur Bestimmung einer zweiten Positionsverschiebung eines zweiten Echos der Echokurve;

wobei die Recheneinheit (220) weiterhin zur Berechnung eines Mobilitätswertes des zweiten Echos der Echokurve unter Verwendung der ersten Positionsverschiebung ausgeführt ist;

wobei ein Mobilitätswert eines Echos ein Kennwert für die Echobewegung ist, welcher unter Berücksichtigung zeitgleich stattfindender Bewegungen oder einer anderweitigen Veränderung zumindest eines weiteren Echos ermittelt wird;

**dadurch gekennzeichnet, dass** der Mobilitätswert erhöht wird, wenn die zweite Positionsverschiebung ungleich null ist;

dass der Mobilitätswert reduziert wird, wenn die zweite Positionsverschiebung null ist und die erste Positionsverschiebung ungleich null ist;

dass zum Initialisierungszeitpunkt eines Tracks ein Mobilitätswert von 0 postuliert wird; und

dass das Füllstandmessgerät ausgeführt ist, von einer ausgeprägten Stationarität eines Tracks, dem das zweite Echo zugeordnet ist, auszugehen, wenn der Mobilitätswert negativ ist.

**2.** Füllstandmessgerät nach Anspruch 1,

wobei die Echokurve zu einem ersten Zeitpunkt gemessen ist;

wobei zur Berechnung des Mobilitätswertes des zweiten Echos der Echokurve nur die erste Positionsverschiebung des ersten Echos verwendet wird, wenn die zweite Positionsverschiebung null ist.

**3.** Füllstandmessgerät nach einem der vorhergehenden Ansprüche,

wobei die Echokurve zu einem ersten Zeitpunkt gemessen ist;

wobei zur Berechnung des Mobilitätswertes des zweiten Echos der Echokurve nur die erste Positionsverschiebung des ersten Echos verwendet wird, wenn die zweite Positionsverschiebung darauf hindeutet, dass sich das zweite Echo seit einer vor dem ersten Zeitpunkt gemessenen Echokurve nicht verschoben hat.

4. Füllstandmessgerät nach einem der vorhergehenden Ansprüche,

wobei die Verwendung der ersten Positionsverschiebung zur Berechnung des Mobilitätswertes des zweiten Echos der Echokurve zu einer Verkleinerung des Mobilitätswertes führt, wenn sich das zweite Echo seit einer vorhergehenden Messung nicht bewegt hat.

5. Füllstandmessgerät nach einem der vorhergehenden Ansprüche,

wobei der Mobilitätswert des zweiten Echos der Echokurve berechnet wird, indem die erste Positionsverschiebung von einem bisherigen Mobilitätswert des zweiten Echos subtrahiert wird.

6. Füllstandmessgerät nach einem der vorhergehenden Ansprüche,

wobei die Recheneinheit (220) zur Berechnung eines Mobilitätswertes des ersten Echos der Echokurve unter Verwendung der zweiten Positionsverschiebung ausgeführt ist.

7. Füllstandmessgerät nach einem der vorhergehenden Ansprüche,

wobei die Recheneinheit (220) zur Berechnung eines Mobilitätswertes eines dritten Echos der Echokurve unter Verwendung derersten Positionsverschiebung, der zweiten Positionsverschiebung und einer dritten Positionsverschiebung des dritten Echos ausgeführt ist.

8. Füllstandmessgerät nach einem der vorhergehenden Ansprüche,

ausgeführt als Füllstandradar.

9. Verfahren zur Mobilitätserkennung eines Echos, das Verfahren aufweisend die Schritte:

Bestimmung einer ersten Positionsverschiebung eines ersten Echos einer Echokurve;

Bestimmung einer zweiten Positionsverschiebung eines zweiten Echos der Echokurve;

Berechnung eines Mobilitätswertes des zweiten Echos der Echokurve unter Verwendung der ersten Positionsverschiebung;

wobei ein Mobilitätswert eines Echos ein Kennwert für die Echobewegung ist, welcher unter Berücksichtigung zeitgleich stattfindender Bewegungen oder einer anderweitigen Veränderung zumindest eines weiteren Echos ermittelt wird;

**dadurch gekennzeichnet, dass** der Mobilitätswert erhöht wird, wenn die zweite Positionsverschiebung ungleich null ist;

dass der Mobilitätswert reduziert wird, wenn die zweite Positionsverschiebung null ist und die erste Positionsverschiebung ungleich null ist;

dass zum Initialisierungszeitpunkt eines Tracks ein Mobilitätswert von 0 postuliert wird; und

dass von einer ausgeprägten Stationarität eines Tracks, dem das zweite Echo zugeordnet ist, ausgegangen wird, wenn der Mobilitätswert negativ ist.

10. Verfahren nach Anspruch 9,

wobei der Mobilitätswert des zweiten Echos der Echokurve berechnet wird, indem die erste Positionsverschiebung von einer Mobilitätskennzahl des zweiten Echos subtrahiert wird.

11. Programmelement, das, wenn es auf einem Prozessor des Füllstandmessgeräts nach Anspruch 1 ausgeführt wird, den Prozessor anleitet, das Verfahren nach Anspruch 9 durchzuführen.

12. Computerlesbares Medium, auf dem das Programmelement nach Anspruch 11 gespeichert ist, das, wenn es auf einem Prozessor des Füllstandmessgeräts nach Anspruch 1 ausgeführt wird, den Prozessor anleitet, das Verfahren nach Anspruch 9 durchzuführen.

**Claims**

1. Fill level measuring device for detecting the mobility of an echo, with the fill level measuring device (200) comprising:

an arithmetic unit (220) for determining a first position shift of a first echo of an echo curve, and for determining a second position shift of a second echo of the echo curve;

wherein the arithmetic unit (220) is further configured to calculate a mobility value of the second echo of the echo curve with the use of the first position shift;

wherein a mobility value of an echo is a characteristic for the echo movement, which characteristic is determined taking into account simultaneously occurring movements or another change of at least one further echo;

**characterized in that**

the mobility value is increased, if the second position shift is not equal to zero;

the mobility value is reduced, if the second position shift is zero and the first position shift is not equal to zero;

at the time point of initialisation of a track a mobility value of 0 is postulated; and

the fill level measuring device is configured to assume a pronounced stationarity of a track, to which the second echo is assigned, when the mobility value is negative.

2. Fill level measuring device according to claim 1,

wherein the echo curve is measured at a first point in time;

wherein for calculation of the mobility value of the second echo of the echo curve only the first position shift of the first echo is used, if the second position shift is zero.

3. Fill level measuring device according to any one of the preceding claims,

wherein the echo curve is measured at a first point in time;

wherein for calculation of the mobility value of the second echo of the echo curve only the first position shift of the first echo is used, if the second position shift indicates that the second echo has not shifted since an echo curve measured prior to the first time point.

4. Fill level measuring device according to any one of the preceding claims, wherein the use of the first position shift for the calculation of the mobility value of the second echo of the echo curve results in a decrease of the mobility value, if the second echo has not moved since a preceding reading.

5. Fill level measuring device according to any one of the preceding claims, wherein the mobility value of the second echo of the echo curve is calculated in that the first position shift is subtracted from a hitherto applicable mobility value of the second echo.

6. Fill level measuring device according to any one of the preceding claims, wherein the arithmetic unit (220) is configured to calculate a mobility value of the first echo of the echo curve with the use of the second position shift.

7. Fill level measuring device according to any one of the preceding claims, wherein the arithmetic unit (220) is configured to calculate a mobility value of a third echo of the echo curve with the use of the first position shift, the second position shift and a third position shift of the third echo.

8. Fill level measuring device according to any one of the preceding claims, designed as a fill level radar.

9. Method for detecting the mobility of an echo, the method comprising the steps of:

determining a first position shift of a first echo of an echo curve;

determining a second position shift of a second echo of the echo curve;

calculating a mobility value of the second echo of the echo curve with the use of the first echo characteristic;

wherein a mobility value of an echo is a characteristic for the echo movement, which characteristic is determined taking into account simultaneously occurring movements or another change of at least one further echo;

**characterized in that**

the mobility value is increased, if the second position shift is not equal to zero;

the mobility value is reduced, if the second position shift is zero and the first position shift is not equal to zero;

at the time point of initialisation of a track a mobility value of 0 is postulated; and

a pronounced stationarity of a track, to which the second echo is assigned, when the mobility value is negative.

10. Method according to claim 9,

wherein the mobility value of the second echo of the echo curve is calculated in that the first position shift is subtracted from a mobility characteristic of the second echo.

11. Program element which, when executed on a processor of the fill level measuring device according to claim 1, instructs the processor to carry out the method according to claim 9.

12. Computer-readable medium, on which the program element according to claim 11 is stored, which, when executed on a processor of the fill level measuring device according to claim 1, instructs the processor to carry out the method according to claim 9.

**Revendications**

1. Appareil de mesure de niveau de remplissage pour détecter la mobilité d'un écho, l'appareil de mesure de niveau de remplissage (200) présentant :

une unité de calcul (220) pour déterminer un premier déplacement de position d'un premier écho d'une courbe d'écho et pour déterminer un deuxième déplacement de position d'un deuxième écho de la courbe d'écho ;
dans lequel l'unité de calcul (220) est en outre conçue pour calculer une valeur de mobilité du deuxième écho de la courbe d'écho en utilisant le premier déplacement de position ;
dans lequel une valeur de mobilité d'un écho est une valeur caractéristique du mouvement de l'écho qui est déterminée en tenant compte de mouvements se produisant simultanément ou d'une autre modification d'au moins un autre écho ;
**caractérisé en ce**
**que** la valeur de mobilité est augmentée lorsque le deuxième déplacement de position n'est pas nul ;
**que** la valeur de mobilité est réduite lorsque le deuxième déplacement de position est nul et que le premier déplacement de position n'est pas nul ;
**qu'**une valeur de mobilité de 0 est postulée à l'instant d'initialisation d'une trace ; et
**que** l'appareil de mesure de niveau de remplissage est conçu pour supposer une stationnarité marquée d'une trace à laquelle le deuxième écho est associé lorsque la valeur de mobilité est négative.

2. Appareil de mesure de niveau de remplissage selon la revendication 1,
dans lequel la courbe d'écho est mesurée à un premier instant ;
dans lequel seul le premier déplacement de position du premier écho est utilisé pour calculer la valeur de mobilité du deuxième écho de la courbe d'écho lorsque le deuxième déplacement de position est nul.

3. Appareil de mesure de niveau de remplissage selon l'une des revendications précédentes,
dans lequel la courbe d'écho est mesurée à un premier instant ;
dans lequel seul le premier déplacement de position du premier écho est utilisé pour calculer la valeur de mobilité du deuxième écho de la courbe d'écho lorsque le deuxième déplacement de position indique que le deuxième écho ne s'est pas déplacé depuis une courbe d'écho mesurée avant le premier instant.

4. Appareil de mesure de niveau de remplissage selon l'une des revendications précédentes,
dans lequel l'utilisation du premier déplacement de position pour calculer la valeur de mobilité du deuxième écho de la courbe d'écho entraîne une diminution de la valeur de mobilité si le deuxième écho n'a pas bougé depuis une mesure précédente.

5. Appareil de mesure de niveau de remplissage selon l'une des revendications précédentes,
dans lequel la valeur de mobilité du deuxième écho de la courbe d'écho est calculée en soustrayant le premier déplacement de position d'une valeur de mobilité précédente du deuxième écho.

6. Appareil de mesure de niveau de remplissage selon l'une des revendications précédentes,
dans lequel l'unité de calcul (220) est conçue pour calculer une valeur de mobilité du premier écho de la courbe d'écho en utilisant le deuxième déplacement de position.

7. Appareil de mesure de niveau de remplissage selon l'une des revendications précédentes,
dans lequel l'unité de calcul (220) est conçue pour calculer une valeur de mobilité d'un troisième écho de la courbe d'écho en utilisant le premier déplacement de position, le deuxième déplacement de position et un troisième déplacement de position du troisième écho.

8. Appareil de mesure de niveau de remplissage selon l'une des revendications précédentes, lequel est conçu comme un radar de niveau de remplissage.

9. Procédé pour détecter la mobilité d'un écho, le procédé comprenant les étapes suivantes :

   détermination d'un premier déplacement de position d'un premier écho d'une courbe d'écho ;
   détermination d'un deuxième déplacement de position d'un deuxième écho de la courbe d'écho ;
   calcul d'une valeur de mobilité du deuxième écho de la courbe d'écho en utilisant le premier déplacement de position ;
   dans lequel une valeur de mobilité d'un écho est une valeur caractéristique du mouvement de l'écho qui est déterminée en tenant compte de mouvements se produisant simultanément ou d'une autre modification d'au moins un autre écho ;
   caractérisé en ce
   la valeur de mobilité est augmentée lorsque le deuxième déplacement de position n'est pas nul ;
   que la valeur de mobilité est réduite lorsque le deuxième déplacement de position est nul et que le premier déplacement de position n'est pas nul ;
   qu'une valeur de mobilité de 0 est postulée à l'instant d'initialisation d'une trace ; et
   qu'une trace à laquelle le deuxième écho est associé est supposée être d'une stationnarité marquée lorsque la valeur de mobilité est négative.

10. Procédé selon la revendication 9, dans lequel la valeur de mobilité du deuxième écho de la courbe d'écho est calculée en soustrayant le premier déplacement de position d'un indicateur de mobilité du deuxième écho.

11. Élément de programme qui, lorsqu'il est exécuté sur un processeur de l'appareil de mesure de niveau de remplissage selon la revendication 1, amène le processeur à mettre en œuvre le procédé selon la revendication 9.

12. Support lisible par ordinateur sur lequel est stocké l'élément de programme selon la revendication 11 qui, lorsqu'il est exécuté sur un processeur de l'appareil de mesure de niveau de remplissage selon la revendication 1, amène le processeur à mettre en œuvre le procédé selon la revendication 9.

Fig. 1

## Fig. 2

| ID | Echoanfang/m | Echoposition/m | Echoende/m | Amplitude/dB |
|----|--------------|----------------|------------|--------------|
| E0 | 1.60 | 2.00 | 2.40 | 40 |
| E1 | 2.60 | 3.00 | 3.40 | 36 |
| E2 | 3.60 | 4.00 | 4.40 | 38 |

## Fig. 3

Fig. 4

| t = $t_3$ : | ID | Zeitpunkt | Echoposition/m |
|---|---|---|---|
| | $T_0$ | $t_1$ | 2.00 |
| | | $t_2$ | 2.00 |
| | | $t_3$ | 2.00 |
| | $T_1$ | $t_2$ | 3.00 |
| | | $t_3$ | 3.00 |
| | $T_2$ | $t_0$ | 1.00 |
| | | $t_1$ | 2.50 |
| | | $t_2$ | 3.50 |
| | | $t_3$ | 4.00 |

# Fig. 5

Fig. 6

Fig. 7

Fig. 8

S ⟵ 900

Anzahl Tracks > 0 ⟵ 901

nein

ja

Selektion des
ersten Tracks ⟵ 902

Bewegung b(τ) ermitteln ⟵ 903

b(τ) > 0 ⟵ 904

ja    nein

Erhöhung der
eigenen Mobilität ⟵ 905

Aktualisierung
fremder Mobilität ⟵ 906

Selektion des
nächsten Tracks ⟵ 908

weitere Tracks
vorhanden? ⟵ 907

ja

nein ⟵ 909

E

Fig. 9

S

9060

9061

nein ← Anzahl Tracks > 1

ja

Selektion des
ersten Tracks

9062

nein ← Track identisch
selektiertem Track
aus Fig. 9 → ja

9063

Bewegung $b_E(\tau)$ ermitteln

9064

$b_E > 0$ → ja

9065

nein

Reduktion der
eigenen Mobilität

9066

9068

Selektion des
nächsten Tracks

weitere Tracks
vorhanden?

9067

E

9069

Fig. 10

Fig. 11

Fig. 12

24

EP 2 366 983 B1

-5        0        5   M

1302

1303

1301

Fig. 13

EP 2 366 983 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3337690 A1
- DE 4234300 A1
- EP 1628119 A1
- US 7284425 B2
- WO 2009003700 A1
- EP 2148219 A1
- US 20050052314 A1
- US 20060052954 A1
- DE 4234300